# EUROPEAN PATENT APPLICATION

(11) **EP 3 266 412 A1**
(43) Date of publication of application: **10.01.2018**
(21) Application number: 16755036.7
(22) Date of filing: 07.01.2016
(51) Int. Cl.: A61C 19/02, A61C 5/00, A61C 19/06

(54) **DENTAL PALLET**

(30) Priority: 27.02.2015 JP 2015038140
(71) Applicant: GC Corporation, Tokyo 113-0033 (JP)
(72) Inventor: NIHEI, Kinya, Tokyo 174-8585 (JP); URATA, Shuntaro, Tokyo 174-8585 (JP)
(74) Representative: Müller-Boré & Partner Patentanwälte PartG mbB
(86) International application number: PCT/JP2016/050301
(87) International publication number: WO 2016/136286

(57) **Abstract**

Provided is a dental palette that can sufficiently shade a stored photopolymerizable dental repair material and a photopolymerizable dental repair material during mixture adjustment without risk of losing a lid, the dental palette having a case including a material storing part and a mixing part, wherein each shading lid that is independently openable and closable is provided for the material storing part and the mixing part.

## Description

### Technical Field

The present invention relates to a dental palette used for dental technical work and the like.

### Background Art

In a dental field, when technical work such as production of a porcelain crown is done, the following operations are carried out: a proper amount of dental repair material powder is stored on a board for mixing dental repair materials (may be referred to as a dental palette, a mixing palette, or a stain palette); water or a mixing liquid dedicated to dental repair materials is added thereto and mixed therewith, to be slurry of certain consistency; and this slurry is built up on a frame or a model.

Generally, this dental palette has the structure of having a small plate part of a concave shape (for example, see Patent Literature 1) or having a plane part for mixing.

Photopolymerizable dental repair materials among dental repair materials react with ambient light (illumination light and natural light). Thus, properties of photopolymerizable dental repair materials deteriorates, that is, color changes unintentionally, strength diminishes, etc., which is problematic. Specifically, pasty photopolymerizable dental repair materials used for a long time are strongly influenced by this. Therefore, deterioration of the operability due to unintentional polymerization is a large problem.

For this reason, such a way of suppressing reaction of a photopolymerizable dental repair material with ambient light during technical work have been figured out as; using a dental palette having a lid with which a whole can be covered, and doing technical work while putting a light shielding cover that has an opening for work over a dental repair material (for example, see Patent Literature 2).

### Citation List

### Patent Literature

Patent Literature 1: JP S55-014076A
Patent Literature 2: JP 2008-206537A

### Summary of Invention

### Technical Problem

Concerning a dental palette that has a lid with which a whole can be covered, it is necessary for the lid to be fully open during technical work such as mixture adjustment. Thus, during work, a stored photopolymerizable dental repair material cannot be shaded.

The light shielding cover of Patent Literature 2 is easy to move during technical work, and to be lost, which is problematic.

An object of the present invention is to provide a dental palette that can sufficiently shade a stored photopolymerizable dental repair material and a photopolymerizable dental repair material during mixture adjustment without risk of losing a lid.

### Solution to Problem

As a result of the inventors' diligent research to solve the above problems, they found that the above described problems can be solved with a dental palette that has a case including a material storing part and a mixing part, wherein each shading lid that is independently openable and closable is provided for the material storing part and the mixing part, to complete the present invention.

That is, the present invention is a dental palette that has a case including a material storing part and a mixing part, wherein each shading lid that is independently openable and closable is provided for the material storing part and the mixing part.

### Advantageous Effects of Invention

According to the present invention, a stored photopolymerizable dental repair material and a photopolymerizable dental repair material during mixture adjustment can be sufficiently shaded because each material has a separate lid. In addition, there is no risk of losing the lids.

### Brief Description of Drawings

Fig. 1 is an exterior perspective view of a dental palette according to one embodiment of the present invention.
Fig. 2 is an exterior perspective view of the dental palette according to one embodiment of the present invention in a state where lids are closed.
Fig. 3 is an exterior perspective view of the dental palette according to one embodiment of the present invention in a state where a lid of a material storing part is open.
Fig. 4 is an exterior perspective view of the dental palette according to one embodiment of the present invention in a state where the lid of the material storing part is open.
Fig. 5 is an exterior perspective view of the dental palette according to one embodiment of the present invention in a state where a lower portion is detached.

### Description of Embodiments

The present invention will be described hereinafter. The present invention is not limited to the following embodiment, and various modifications and replacements can be applied to the following embodiment unless departing from the scope of the present invention.

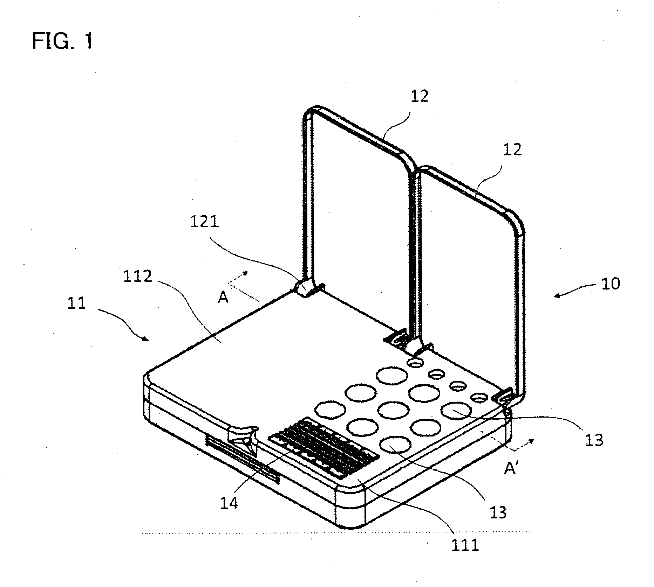

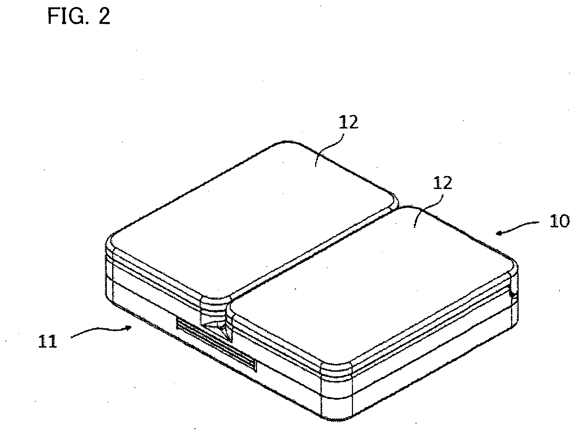

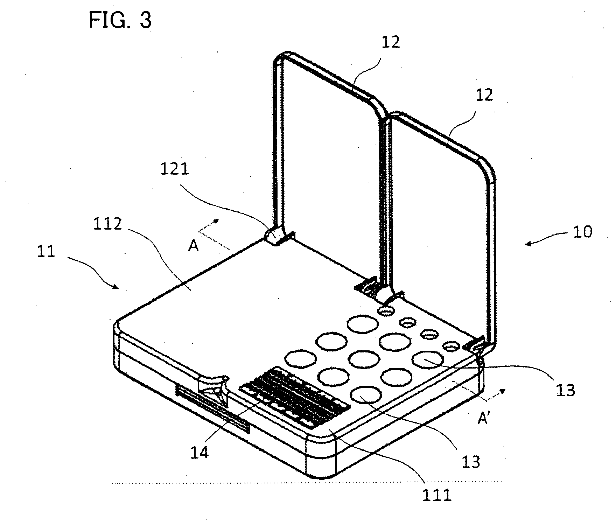

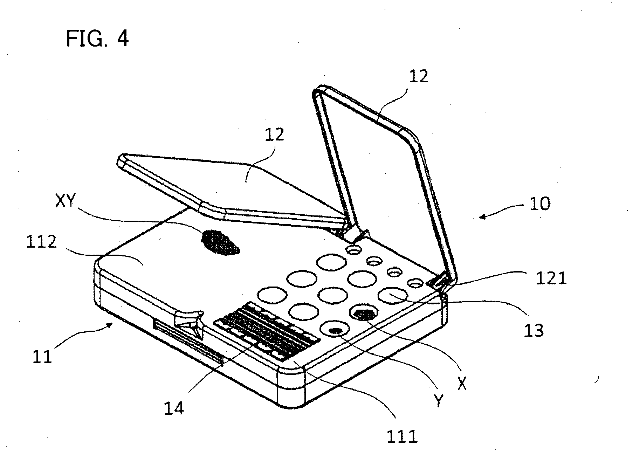

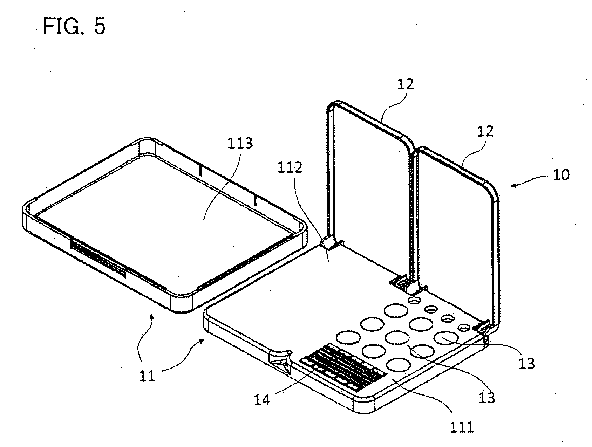

As shown in Figs. 1, 2, 3, 4 and 5, a dental palette 10 according to this embodiment has a case 11 and lids 12.

The case 11 is a box-like or board-like base of the dental palette 10, and includes a material storing part 111 and a mixing part 112 for dental repair materials. The material storing part 111 and the mixing part 112 may be integrally formed, or separately structured to be coupled with each other. At this time, preferably the height at each upper surface is not different significantly from each other because of easy use.

At least one concavity 13 for storing a dental repair material is arranged on the material storing part 111. The concavity 13 is a circle in a top view, perpendicularly to the plane surface of the mixing part 112, and has a bottom surface of an approximate circular arc in the cross-sectional view taken along the line A-A' in the embodiment of Fig. 1.

The mixing part 112 is preferably a plane surface as shown in Fig. 1 in order to facilitate mixing work. The mixing part 112 may be a slightly concave smooth surface or a gently curved surface in order to facilitate work.

Each of the lids 12 has a light shading property, is provided for the material storing part 111 and the mixing part 112, and independently openable and closeable.

A material through which visible light is not transmitted at all can be used as a material of the lids 12. Even a transparent or semitransparent material such as resin and glass can be also used if light of a wave range where a photopolymerizable dental repair material does not react is transmitted through the material but light of a wave range where a photopolymerizable dental repair material reacts is not transmitted through the material.

While means of allowing the lids 12 to be openable and closeable is not especially limited, a way of using a hinge 121 can be exemplified. Other examples of the means include a slide type.

A ruler part 14 for squeezing out a material stored in a tube, to measure and take the material may be included in the dental palette 10 according to the embodiment if necessary.

### Reference Signs List

10 dental palette
11 case
12 lid
13 concavity
14 ruler part
111 material storing part
112 mixing part
113 lower portion of a case
121 hinge

## Claims

1. A dental palette that has a case including a material storing part and a mixing part, wherein
each shading lid that is independently openable and closable is provided for the material storing part and the mixing part.
